# DEMANDE DE BREVET EUROPEEN

(11) **EP 1 339 265 A1**
(43) Date de publication de la demande: **27.08.2003**
(21) Numéro de dépôt: 02358027.7
(22) Date de dépôt: 06.12.2002
(51) Int. Cl.: H05B 37/02, H05B 39/04, H05B 33/08

(54) **Transformateur électronique pour guirlandes lumineuses**

(30) Priorité: 10.12.2001 FR 0115901
(71) Demandeur: Jean-Paul Blachere (SA), 84400 Apt (FR)
(72) Inventeur: Blachere, Jean-Paul, 84400 Apt (FR)
(74) Mandataire: Roman, Michel

(57) **Abrégé**

La présente invention a pour objet un transformateur électronique pour guirlandes lumineuses.

Il est constitué d'un convertisseur électronique abaisseur de tension apte à fournir, en très basse tension, une puissance de 5 à 40 Watts ou plus, comprenant en particulier un redresseur (5) à pont de diodes, un filtre (4) limitant les perturbations de la tension d"entrée, un élément de découpage de la tension utilisant des transistors à effet de champ (6, 7) et fournissant une tension de sortie périodique, un transformateur magnétique (8) d'isolement et une boucle de retour limitant la puissance d'entrée en cas de court circuit du secondaire.

Il est destiné à la réalisation de décorations lumineuses temporaires ou permanentes situées aussi bien à l'extérieur qu'à l'intérieur, telles que celles installées traditionnellement pour les fêtes ou autres manifestations.

## Description

La présente invention a pour objet un transformateur électronique pour guirlandes lumineuses.

Il concerne d'une manière générale le domaine industriel et commercial de la fabrication et de la diffusion de matériel destiné à la réalisation de décorations lumineuses temporaires ou permanentes situées aussi bien à l'extérieur qu'à l'intérieur, telles que celles installées traditionnellement pour les fêtes ou autres manifestations. Il peut cependant trouver de nombreuses applications, par exemple dans le domaine publicitaire ou pour l'animation de vitrines commerciales.

II existe à ce jour un grand nombre de système de décors lumineux, surtout dans le domaine des installations temporaires réalisées aussi bien à l'extérieur qu'à l'intérieur lors des fêtes de fin d'année, par exemple.

L'un de ces systèmes, qui rencontre un succès grandissant depuis quelques années, est constitué d'un nombre important d'ampoules électriques de faibles dimensions disposées à intervalles réguliers le longs de câbles d'alimentation et disposées en guirlandes ou en rideaux lumineux.

Pour les installations à l'intérieur et l'extérieur, la très basse tension de sécurité peut être utilisée. Les réalisations connues sont généralement alimentées au moyen d'un transformateur ferromagnétique lourd et encombrant.

Il existe cependant des convertisseurs abaisseurs électroniques, appelés communément "transformateurs électroniques" plus légers, mais ces appareils sont onéreux et mal adaptés à l'alimentation de guirlandes lumineuses. Leur tension de sortie est en effet fonction de la charge, donc fonction de l'impédance de charge (qui elle même est fonction de la fréquence). Les convertisseurs abaisseurs existants dans le commerce et destinés aux sources d'éclairage sont dotés d'un dispositif de limitation de courant permettant de gérer les surcharges. Ce système permet de limiter les échauffements mais annule la puissance de sortie.

Ces produits ne sont pas adaptés aux applications visées par le présent document (grande longueur de câble, faible puissance des ampoules).

Le dispositif selon l'invention a pour objectif de remédier à cet état de choses. Il permet en effet de réaliser des alimentations électriques utilisant un transformateur abaisseur de tension compact et léger particulièrement adapté à l'alimentation de décors utilisables à l'intérieur ou à l'extérieur et constitués de guirlandes, de rideaux d'ampoules miniatures montées le long de conducteurs électriques ou d'équipement similaires.

Ce convertisseur électronique, abaisseur de tension (très basse tension de sécurité délivrée au secondaire), sans dispositif de limitation de courant, reste protégé contre les courts-circuits survenant au secondaire par effet de rétroaction ("feed back") sur les transistors, contre les courts-circuits des composants par fusible à l'entrée et contre les surcharges par fusible thermique posé sur les transistors.

Il est constitué d'un convertisseur électronique abaisseur de tension apte à fournir, en très basse tension une puissance de 5 à 40 Watts ou plus, comprenant en particulier un redresseur à pont de diodes, un filtre limitant les perturbations de la tension d"entrée, un élément de découpage de la tension utilisant des transistors à effet de champ et fournissant une tension de sortie périodique, un transformateur magnétique d'isolement et une boucle de retour limitant la puissance d'entrée en cas de court circuit du secondaire.

Sur les dessins annexés, donnés à titre d'exemples non limitatifs de formes de réalisation conformes à la présente demande :
la figure 1 est un schéma symbolique du transformateur électronique abaisseur de tension,
la figure 2 représente un ensemble constitué d'un transformateur électronique équipé d'un clignoteur animateur et alimentant une guirlande lumineuse
et la figure 3 représente un ensemble constitué d'un transformateur électronique équipé d'un animateur multi voies et alimentant une série de guirlandes lumineuses.

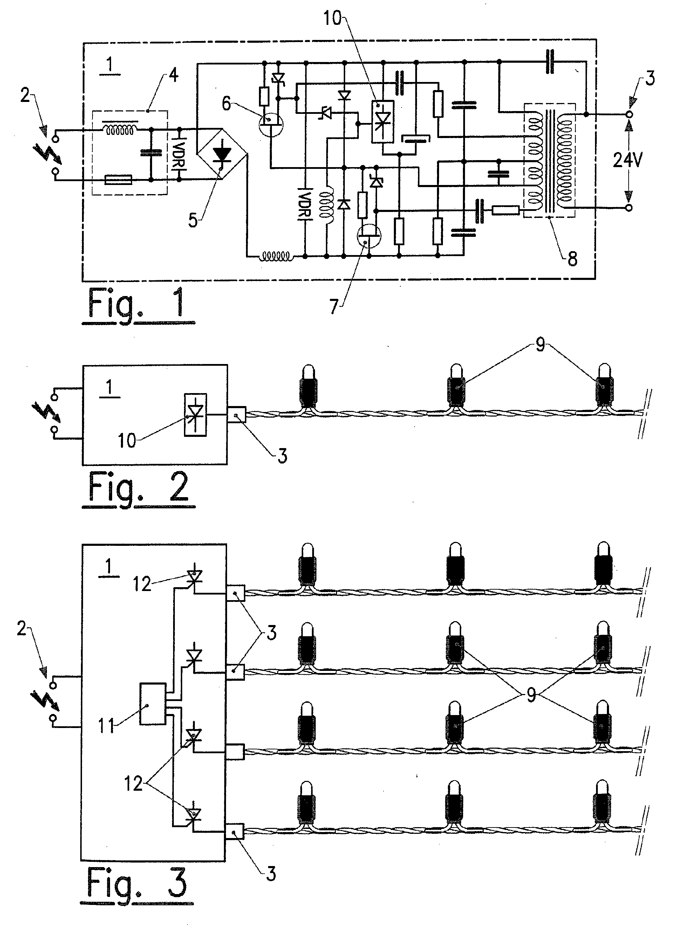

Le dispositif, figures 1 à 3, est constitué d'un boîtier 1 dont l'indice de protection est au minimum IP24 pour un usage extérieur et IP20 pour un usage intérieur, contenant un convertisseur électronique abaisseur de tension et comportant un moyen de branchement 2 au réseau d'énergie électrique (110, 230 Volts) ainsi qu'une ou plusieurs sorties 3 très basse tension (24 Volts par exemple).

Le convertisseur électronique se compose d'un module de redressement 5 en tension continue (pont de diodes), d'un filtre 4 limitant les perturbations de la tension d'alimentation, d'un filtre de lissage (tension continue lissée par condensateurs), d'un module de découpage de la tension utilisant deux transistors à effet de champ 6, 7, avec filtrage, d'une boucle de retour ("feed back") simulant la puissance de sortie des transistors en cas de court circuit du secondaire, d'un jeu de condensateurs et d'inductances assurent une tension de sortie périodique stabilisée de fréquence supérieure ou égale à 10 KHz et d'un transformateur magnétique d'isolement 8 assurant la très basse tension de sécurité (TBTS) (figure 1).

Le moyen de branchement 2 au réseau d'énergie électrique pourra consister en une fiche de prise de courant directement moulée ou non avec l'enveloppe du boîtier du dispositif.

La sortie 3 très basse tension pourra être raccordée directement à une ou plusieurs guirlandes lumineuses 9 ou être constituée d'un connecteur monovoie ou multivoies.

Le tranformateur électronique peut comporter un animateur éventuellement intégré pour guirlande lumineuse 9 constitué d'un clignoteur 10 une voie disposé en amont du transformateur magnétique d'isolement 8 (figure 2) ou d'un animateur multivoies en aval de ce transformateur, composé d'un microprocesseur 11 pré-programmé, de filtres et de thyristors 12 ou de triac provoquant un clignotement par hachage de la tension en découpant la tension secondaire au gré des ordres envoyés sur les gâchettes (figure 3).

Le dispositif peut comporter un système de redressement de la tension secondaire, de façon à fournir un courant continu apte à alimenter des systèmes lumineux équipés de diodes électroluminescentes (LED).

Le positionnement des divers éléments constitutifs donne à l'objet de l'invention un maximum d'effets utiles qui n'avaient pas été, à ce jour, obtenus par des dispositifs similaires.

## Revendications

1. °. Transformateur électronique pour guirlandes lumineuses, destiné à la réalisation de décorations lumineuses temporaires ou permanentes situées à l'extérieur ou à l'intérieur, telles que les décors installés traditionnellement pour les fêtes ou autres manifestations, mais pouvant être utilisé dans de nombreuses applications, par exemple dans le domaine publicitaire ou pour l'animation de vitrines commerciales,
**caractérisé en ce qu'**il est constitué d'un convertisseur électronique abaisseur de tension apte à débiter un courant à très basse tension de sécurité (TBTS) et comprenant en particulier : un redresseur (5) à pont de diodes, un élément de découpage de la tension utilisant des transistors à effet de champ (6, 7) et fournissant une tension de sortie périodique, un transformateur magnétique d'isolement (8) et une boucle de retour limitant la puissance d'entrée en cas de court circuit du secondaire.

2. Transformateur électronique selon la revendication 1, se caractérisant par le fait qu'il comporte un filtre (4) limitant les perturbations de la tension d'alimentation ainsi qu'un filtre de lissage à condensateurs de la tension continue et une boucle de retour simulant la puissance de sortie de transistors en cas de court circuit du secondaire.

3. Transformateur électronique selon l'une quelconque des revendications précédentes, se caractérisant par le fait que la tension de sortie est découpée à une fréquence supérieure ou égale à 10 kHz.

4. Transformateur électronique selon l'une quelconque des revendications précédentes, se caractérisant par le fait que sa puissance de sortie est supérieure ou égale à 5 Watts.

5. Transformateur électronique selon l'une quelconque des revendications précédentes, se caractérisant par le fait qu'il comporte un animateur pour guirlande lumineuse (9) constitué d'un clignoteur (10) une voie disposé en amont du transformateur magnétique d'isolement (8).

6. Transformateur électronique selon l'une quelconque des revendications 1 à 4, se caractérisant par le fait qu'il comporte un animateur pour guirlandes lumineuses (9) constitué d'un système multivoies disposé en aval du transformateur magnétique d'isolement (8)., composé d'un microprocesseur 11 pré-programmé, de filtres et de thyristors 12 ou de triac provoquant un clignotement par hachage de la tension en découpant la tension secondaire au gré des ordres envoyés sur les gâchettes.

7. Transformateur électronique selon l'une quelconque des revendications 5 ou 6, se caractérisant par le fait que l'animateur est intégré au convertisseur abaisseur..

8. Transformateur électronique selon l'une quelconque des revendications précédentes, se caractérisant par le fait qu'il comporte un système de redressement de la tension secondaire, de façon à fournir un courant continu apte à alimenter des systèmes lumineux équipés de diodes électroluminescentes (LED).

9. Transformateur électronique selon l'une quelconque des revendications précédentes, se caractérisant par le fait qu'il est disposé dans un boîtier (1) dont l'indice de protection est au minimum IP20 pour un usage à l'intérieur et IP24 pour un usage à l'extérieur.
